# EUROPÄISCHE PATENTSCHRIFT

(11) **EP 3 414 069 B1**
(45) Veröffentlichungstag und Bekanntmachung des Hinweises auf die Patenterteilung: **13.01.2021**
(21) Anmeldenummer: 17700846.3
(22) Anmeldetag: 20.01.2017
(51) Int. Cl.: B29B 11/16, B29C 70/38, B29B 15/12, B29K 101/12

(54) **VERFAHREN ZUR HERSTELLUNG THERMOPLASTISCHER PREFORMS**
METHOD FOR PRODUCING THERMOPLASTIC PREFORMS
PROCÉDÉ DE FABRICATION DE PRÉFORMES THERMOPLASTIQUES

(30) Priorität: 11.02.2016 DE 102016202053
(43) Veröffentlichungstag der Anmeldung: 19.12.2018
(73) Patentinhaber: Volkswagen Aktiengesellschaft, 38440 Wolfsburg (DE)
(72) Erfinder: BITTERLICH, Maurice, 38165 Lehre (DE); EHLEBEN,Max, 38126 Braunschweig (DE); MERTENS, Thomas, 38468 Ehra-Lessien (DE)
(86) Internationale Anmeldenummer: PCT/EP2017/051210
(87) Internationale Veröffentlichungsnummer: WO 2017/137233

(56) Entgegenhaltungen:
- EP-A2- 2 529 918
- US-A- 5 936 861
- US-B1- 6 558 146
- VAN RIJSWIJK ET AL: "Reactive processing of textile fiber-reinforced thermoplastic composites - An overview", COMPOSITES PART A: APPLIED SCIENCE AND MANUFACTURING, ELSEVIER, AMSTERDAM, NL, vol. 38, no. 3, 15 December 2006 (2006-12-15), pages 666-681, XP005805604, ISSN: 1359-835X

## Beschreibung

Die Erfindung betrifft ein Verfahren zur Herstellung thermoplastischer Preforms, wobei ein Faserwerkstoff mit einem reaktiven thermoplastischen Matrixwerkstoff getränkt wird.

Aufgrund der Zielsetzung zur Reduzierung der CO2-Emission werden an die Materialien, insbesondere in der Automobilfertigung, unterschiedlichste Anforderungen gestellt. Eine der wichtigsten Anforderungen ist dabei die Leichtbauweise. Eine Möglichkeit zur Reduzierung des Gewichts von Bauteilen und Baugruppen stellt der Einsatz von faserverstärkten Kunststoffbauteilen dar. Dabei kann gegenüber klassischen Konstruktionswerkstoffen wie Aluminium oder Stahl bis zu 50% Gewicht bei gleichem Eigenschaftsprofil reduziert werden.

Durch Kombination von Kunststoffen mit Verstärkungsfasern kann ein großes Gewichtseinsparpotential generiert werden. Der Einsatz von faserverstärkten Kunststoffen ist derzeit allerdings mit hohen Kosten verbunden, da die Fertigungsprozesse, in welchen Werkstoffe mit sehr guten mechanischen Eigenschaften hergestellt werden können, nur bedingt automatisierbar sind.

Die Herstellung von zwei- oder dreidimensionalen faserverstärkten Bauteilstrukturen wird oft über den Zwischenschritt von Halbwerkzeugen oder endkonturnahen Faservorformlingen bzw. den sogenannten Preforms realisiert. Preforms sind beispielsweise ein wesentlicher, die Kosten und Eigenschaften dominierender Bestandteil einer Produktionskette von den Ausgangsrohstoffen (Matrixwerkstoff und Faserwerkstoff) hin zum faserverstärkten Kunststoffbauteil.

### Stand der Technik

Im Stand der Technik sind unterschiedliche Herstellungsverfahren zur Herstellung von thermoplastischen Preforms bekannt. Beispielsweise sind Tape-Legeverfahren für die Herstellung von Preforms bekannt. Derartige Tape-Legeverfahren sind zwar automatisierbar und für den Serieneinsatz, beispielsweise im Automobilbau, prinzipiell geeignet. Dennoch werden hierfür Ausgangsmaterialien, beispielsweise ein mit thermoplastischer Matrix getränktes textiles Halbzeug, benötigt, welche jedoch am Markt nur zu hohen Preisen verfügbar sind.

Des Weiteren gibt es Ansätze, trockene Faserwerkstoffe auf 3D-Geometrien zu applizieren. Für derartige Technologien werden jedoch zusätzlich Bindermaterialien benötigt, um die Faserwerkstoffe lastpfadgerecht auf der 3D-Kontur zu fixieren. Erst in einem späteren Schritt wird in einem separaten Werkzeug der Matrixwerkstoff eingebracht.

In der WO 2012/116947 wird ein Verfahren zur Herstellung von faserverstärkten, flachen Halbzeugen mit Polyamidmatrix beschrieben.

Die DE 10 2010 012 719 A1 betrifft eine Legekopfkompaktvorrichtung zum Ablegen von imprägnierten Endlosfaserbändern, sowie eine Legeanlage, die die Legekopfkompaktvorrichtung umfasst und mit der eine Preform aus abgelegten imprägnierten Endlosfaserbändern hergestellt werden kann.

Die EP2 529 918 A2 beschreibt ein Verfahren und eine Anordnung zum Aufbringen einer mit einer aus einem thermoplastischen Material bestehenden Imprägnierung versehenen Endlosfaser auf ein sich bewegendes Objekt, wobei die Endlosfaser nach deren Imprägnierung eine Richteinrichtung zugeführt wird.

In der US 6 558 146 B1 wird ein Auftrags - und Formverfahren offenbart, in welchem eine faserverstärkte Verbindung aus einer Polymerschmelze produziert werden kann.

Die US 5 936 861 A betrifft eine Vorrichtung und ein Verfahren, um dreidimensionale Objekte aus faserverstärkten Verbundwerkstoff herzustellen, in dem mehrere Schichten aus Fasern und Matrixmaterial im gewünschten Design aufgetragen werden.

### Darstellung der Erfindung: Aufgabe, Lösung, Vorteile

Aufgabe der vorliegenden Erfindung ist es, ein Verfahren zur Herstellung thermoplastischer Preforms derart weiter zu verbessern, dass endlosfaserverstärkte thermoplastische Kunststoffe wirtschaftlich und leichtbaugerecht gefertigt werden können.

Erfindungsgemäß wird hierfür ein Verfahren zur Herstellung thermoplastischer Preforms vorgeschlagen, wobei ein Faserwerkstoff mit einem reaktiven thermoplastischen Matrixwerkstoff getränkt wird. Das erfindungsgemäße Verfahren weist zumindest die folgenden Schritte auf:
a) Zuführen des Faserwerkstoffs in eine Imprägniervorrichtung; und
b) Tränken des Faserwerkstoffs mit dem Matrixwerkstoff innerhalb der Imprägniervorrichtung; und
c) Ablegen des mit dem Matrixwerkstoff getränkten Faserwerkstoffs auf einem Preformwerkzeug; und
d) Abkühlen des auf dem Preformwerkzeug abgelegten und mit dem Matrixwerkstoff getränkten Faserwerkstoffs, bis der Matrixwerkstoff erstarrt ist.

Unter einem Preform ist im Sinne dieser Erfindung ein geometrisch sowie auch werkstofflich betrachtetes Zwischenprodukt zu verstehen. Aus einem nach diesem erfindungsgemäßen Verfahren hergestellten thermoplastischen Preform kann dann in einem weiteren Verarbeitungsverfahren das Zielbauteil, nämlich ein faserverstärktes thermoplastisches Kunststoffbauteil, hergestellt werden. Das Preform wird gemäß der vorliegenden Erfindung aber bereits mit einer endkonturnahen Abbildung der Geometrie des späteren Bauteils (Zielbauteil) hergestellt).

Gemäß der vorliegenden Erfindung kann der Faserwerkstoff in jeder geeigneten Form zur Verfügung stehen. Beispielsweise können textile Halbzeuge, wie uni- oder mehrdirektionale Gelege vorgesehen werden. Bevorzugterweise sind aber Endlosfaserrovings vorgesehen, welche mittels einer Faserzuführeinheit der Imprägniervorrichtung zugeführt werden. Hierfür kann der Faserwerkstoff, beispielsweise die Endlosfaserrovings, von einer Art Rolle oder Spule abgewickelt werden.

Des Weiteren wird der Imprägniervorrichtung der Matrixwerkstoff, nämlich ein reaktiver thermoplastischer Matrixwerkstoff, welcher die Ausgangsbasis für thermoplastische Kunststoffe bildet, zugeführt.

Innerhalb der Imprägniervorrichtung wird der Faserwerkstoff mit dem Matrixwerkstoff getränkt bzw. imprägniert. Hierfür kann der Faserwerkstoff kontinuierlich durch die Imprägniervorrichtung hindurch geführt werden und beim Hindurchführen durch die Imprägniervorrichtung innerhalb der Imprägniervorrichtung der Matrixwerkstoff auf den Faserwerkstoff aufgebracht werden.

Bevorzugterweise werden die vorgenannten Verfahrensschritte a) bis d) in der vorgenannten Reihenfolge durchgeführt. Erfindungsgemäß ist aber zumindest vorgesehen, dass der Faserwerkstoff mit dem Matrixwerkstoff getränkt wird, bevor der Faserwerkstoff auf dem Preformwerkzeug abgelegt wird.

Der mit dem Matrixwerkstoff getränkte Faserwerkstoff wird mittels eines Ablagemittels auf dem Preformwerkzeug bzw. auf der Oberfläche des Preformwerkzeugs abgelegt. Das Ablagemittel kann somit als eine Art Appliziereinheit angesehen werden. In der einfachsten Form kann das Ablagemittel als Rolle oder Walze ausgebildet sein.

Das erfindungsgemäße Verfahren ist als kontinuierlicher Prozess bzw. Verfahrensablauf ausgebildet. Darunter ist insbesondere zu verstehen, dass der Faserwerkstoff durch die Imprägniervorrichtung hindurch zum Ablagemittel hin kontinuierlich geführt bzw. gefördert wird und währenddessen innerhalb der Imprägniervorrichtung mit dem Matrixwerkstoff getränkt wird. Der Faserwerkstoff wird erfindungsgemäß unter Zufuhr von Wärme mit dem Matrixwerkstoff getränkt. Insbesondere ist vorgesehen, dass der Matrixwerkstoff während der Herstellung der Preforms lediglich mit einer Temperatur unterhalb der Schmelztemperatur des Endprodukts (faserverstärkten Kunststoffbauteils) beaufschlagt wird. Der Faserwerkstoff wird von der Faserzuführeinheit bis zum Ablagemittel bzw. zum Ablegen des Faserwerkstoffs auf dem Preformwerkzeug nicht gekürzt bzw. getrennt oder unterbrochen.

Unter dem Preformwerkzeug ist ein Körper zu verstehen, welcher eine geformte Oberfläche zur Formgebung aufweist. Mittels dieser vorgegebenen geformten Oberfläche wird den aufgelegten Preforms beim Abkühlen auf dem Preformwerkzeug die gewünschte Form eingeprägt.

Beim Abkühlen erstarrt der Matrixwerkstoff, und es entsteht somit ein formstabiler reaktiver thermoplastischer Preform. Bevorzugterweise kann der Prozess des Erstarrens dadurch beschleunigt werden, dass das Preformwerkzeug selbst gekühlt wird.

Mit dem erfindungsgemäßen Verfahren ist eine automatisierte Ablage von imprägnierten Faserwerkstoffen, zum Beispiel textilen Rovingsträngen oder textilen Halbzeugen wie unidirektionalen oder multidirektionalen (multiaxiale) Gelegen, möglich. Des Weiteren ist das erfindungsgemäße Verfahren kostengünstig automatisierbar. Die nach diesem Verfahren hergestellten thermoplastischen Preforms ermöglichen insbesondere eine sehr wirtschaftliche und leichtbaugerechte Herstellung von faserverstärkten thermoplastischen Kunststoffen. Ferner kann mit dem erfindungsgemäßen Verfahren im Gegensatz zu aus dem Stand der Technik bekannten Verfahren Verschnitt und zusätzlicher Abfall vermieden werden. Auch können günstige Ausgangsmaterialien direkt zur gewünschten Bauteilkontur verarbeitet werden ohne aufwendige Zwischenschritte wie beispielsweise bei der Herstellung von textilen Halbzeugen. Des Weiteren ist für das erfindungsgemäße Verfahren kein Einsatz von Bindermaterial zur Fixierung des Faserwerkstoffs auf dem Preformwerkzeug notwendig.

Erfindungsgemäß ist ferner die Herstellung eines faserverstärkten thermoplastischen Kunststoffbauteils vorgesehen, wobei in einer Vorstufe thermoplastische Preforms gemäß dem vorgenannten erfindungsgemäßen Verfahren hergestellt werden und im Anschluss daran die Preforms zum faserverstärkten thermoplastischen Kunststoffbauteil weiterverarbeitet werden. Hierfür können die Preforms, insbesondere aufgrund deren Formstabilität, händisch oder mittels eines Greifers von dem Preformwerkzeug aufgenommen und in ein Presswerkzeug gelegt werden. In diesem, bevorzugterweise beheizten, Presswerkzeug erfolgt die vollständige Polymerisation des Matrixsystems zu einem thermoplastischen Kunststoff. Des Weiteren wird dem Bauteil durch das Presswerkzeug die endgültige gewünschte Form eingeprägt. Alternativ zu einem Presswerkzeug könnte auch ein einseitig beheiztes Werkzeug, beispielsweise gekoppelt mit einer oberen Wärmequelle wie einem Infrarotstrahler, eingesetzt werden. Dabei würde die obere Werkzeughälfte des Presswerkzeugs beispielsweise durch einen Vakuumsack oder eine Druckmembran ersetzt werden, um das thermoplastische Kunststoffbauteil in die gewünschte Endkontur bzw. Form zu bringen.

Bevorzugterweise ist vorgesehen, dass der Faserwerkstoff bei einem Druck kleiner als 5 bar über Atmosphärendruck mit dem Matrixwerkstoff getränkt wird. Aufgrund der besonders niedrigen Viskosität ist es möglich, den Faserwerkstoff bei einem besonders kleinen Druck mit dem Matrixwerkstoff zu tränken bzw. zu imprägnieren. Dadurch entsteht nur eine sehr geringe Faserschädigung des Faserwerkstoffs, und es werden bessere mechanische Eigenschaften, zum Beispiel eine bessere Festigkeit, für das Endbauteil erreicht. Des Weiteren ist dadurch eine einfachere und kostengünstigere Fertigungsanlage ausreichend. Insbesondere kann für die Imprägniervorrichtung eine einfache Pumpenanordnung, zum Beispiel in Form einer Niederdruckpumpe, insbesondere einer Zahnradpumpe, vorgesehen werden. Hierdurch können erhebliche Kosten eingespart werden. Des Weiteren kann die technische Komplexität der Anlage gering gehalten werden, was mit einer weniger störanfälligen Anlage einhergeht.

Der Faserwerkstoff wird unter Zufuhr von Wärme mit dem Matrixwerkstoff getränkt. Besonders bevorzugterweise ist vorgesehen, dass der Faserwerkstoff unter Zufuhr von Wärme mit einer Temperatur zwischen 60° Celsius und 140° Celsius, ganz besonders bevorzugterweise zwischen 70° Celsius und 120° Celsius, mit dem Matrixwerkstoff getränkt wird. Dadurch, dass die Temperatur der Wärmezufuhr möglichst gering gehalten wird, kann eine hohe Energieeinsparung erreicht werden. Des Weiteren kann somit eine besonders schonende Verarbeitung des Faserwerkstoffs gewährleistet werden.

Auch ist bevorzugterweise vorgesehen, dass der Matrixwerkstoff beim Ablegen des mit dem Matrixwerkstoff getränkten Faserwerkstoffs auf dem Preformwerkzeug noch einen flüssigen Zustand aufweist. Darunter ist zu verstehen, dass der mit dem Matrixwerkstoff getränkte Faserwerkstoff unmittelbar bzw. zumindest in direkter Abfolge nach dem Imprägnieren auf dem Preformwerkzeug abgelegt wird. Zumindest ist sichergestellt, dass beim Ablegen des getränkten Faserwerkstoffs der Matrixwerkstoff noch in einem flüssigen Zustand ist.

Beim Ablegen des mit dem Matrixwerkstoff getränkten Faserwerkstoffs wird dieser bevorzugterweise gegen das Preformwerkzeug angedrückt. Durch das Andrücken des getränkten Faserwerkstoffs auf die Oberfläche des Preformwerkzeugs kann der entstehenden Schicht eine gewünschte Form eingeprägt werden, die entstehende Schicht in Bezug auf deren Dicke reguliert werden und ein besseres Haften auf dem Preformwerkzeug sichergestellt werden.

Ferner ist bevorzugterweise vorgesehen, dass beim Ablegen des mit dem Matrixwerkstoff getränkten Faserwerkstoffs diesem Wärme zugeführt wird. Auch hier wird dem getränkten Faserwerkstoff vorzugsweise Wärme mit einer Temperatur unterhalb der Schmelztemperatur des Endprodukts zugeführt. Besonders bevorzugterweise wird dem getränkten Faserwerkstoff beim Ablegen auf dem Preformwerkzeug Wärme mit einer Temperatur zwischen 60° Celsius und 140° Celsius, sowie ganz besonders bevorzugterweise mit einer Temperatur zwischen 70° Celsius und 120° Celsius, zugeführt.

Des Weiteren wird der Matrixwerkstoff vor oder beim Zuführen in die Imprägniervorrichtung dosiert. Hierfür kann eine separate Dosiervorrichtung der Imprägniervorrichtung vorgeschaltet werden. Des Weiteren könnte eine Dosiervorrichtung in die Imprägniervorrichtung selbst integriert sein. Mittels der Dosiervorrichtung wird der Matrixwerkstoff unmittelbar vor dem Tränken des Faserwerkstoffs mit dem Matrixwerkstoff dosiert. Somit ist das Dosieren des Matrixwerkstoffs bevorzugterweise in den kontinuierlichen Verfahrensablauf bzw. in den kontinuierlichen Prozess zur Herstellung der Preforms integriert. Beispielsweise kann beim Dosieren Lactam zusammen mit einem Aktivator und/oder Katalysator aufgeschmolzen, vermischt und dosiert werden. Besonders bevorzugterweise ist dabei Caprolactam oder Laurinlactam vorgesehen. Caprolactam hat den Vorteil, dass dieser bei Raumtemperatur in einen kristallinen Zwischenzustand übergeht und somit besonders vorteilhaft zu bearbeiten ist.

Der Faserwerkstoff wird bevorzugterweise mit einer vorgegebenen Geschwindigkeit durch die Imprägniervorrichtung hindurchgeführt und gleichzeitig mit einer vorgegebenen Menge des (in der Dosiervorrichtung dosierten Menge) Matrixwerkstoffs mit diesem getränkt.

Ferner ist bevorzugterweise vorgesehen, dass der im Matrixwerkstoff getränkte Faserwerkstoff mittels eines Ablagemittels in mehreren Schichten übereinander auf dem Preformwerkzeug abgelegt wird. Dabei können bereichsweise unterschiedliche Schichtdicken vorgesehen werden. Beispielsweise kann bereichsweise auf dem Preformwerkzeug eine unterschiedliche Anzahl von Schichten übereinander angeordnet werden oder unterschiedlich dicke Schichten übereinander angeordnet werden. Dadurch, dass vorzugsweise unterschiedliche Schichtdicken mit dem getränkten Faserwerkstoff auf dem Preformwerkzeug abgelegt werden, entsteht eine besonders lastpfadgerechte Struktur mit einem sehr hohen Leichtbaugrad.

Des Weiteren ist bevorzugterweise das Hinzufügen von Verstärkungs- und/oder Fügeelementen, zum Beispiel Metallelementen wie Inserts aus Metall, vorgesehen. Derartige Verstärkungs- und/oder Fügeelemente können beim Ablegen des mit Matrixwerkstoff getränkten Faserwerkstoffs auf dem Preformwerkzeug mit in das Preform eingebracht werden. Beispielsweise können die Verstärkungs- und/oder Fügeelemente auf und/oder zwischen einzelne Schichten des getränkten Faserwerkstoffs aufgebracht werden.

Erfindungsgemäß wird ein faserverstärktes Kunststoffbauteil mit einem mit reaktivem thermoplastischem Werkstoff getränkten Faserwerkstoff hergestellt. Das faserverstärkte Kunststoffbauteil wird dabei aus einem wie vorbeschrieben hergestellten Preform hergestellt. Bevorzugterweise weist der Faserwerkstoff des faserverstärkten Kunststoffbauteils Kohlenstoff-, Glas-, Aramid-, Basalt- und/oder Naturfasern auf. Der Matrixwerkstoff basiert vorzugsweise auf Lactam, insbesondere Caprolactam oder Laurinlactam. Besonders bevorzugterweise wurden die Preforms vor der Herstellung des faserverstärkten Kunststoffbauteils aus mit dem Matrixwerkstoff getränkten Endlosfaserrovings hergestellt.

Des Weiteren ist eine Vorrichtung zur Herstellung von thermoplastischer Preforms vorgesehen, wobei die Vorrichtung eine Imprägniervorrichtung zum Tränken eines Faserwerkstoffs mit einem reaktiven thermoplastischen Matrixwerkstoff, eine Faserzuführeinheit zum Zuführen des Faserwerkstoffs in die Imprägniervorrichtung, eine Dosiervorrichtung zur Dosierung des Matrixwerkstoffs und ein Ablagemittel zur Ablage des mit dem Matrixwerkstoff getränkten Faserwerkstoffs auf einem Preformwerkzeug aufweist. Die Vorrichtung ist erfindungsgemäß zur Herstellung thermoplastischer Preforms gemäß einem vorbeschriebenen Verfahren ausgebildet.

Die Imprägniervorrichtung und/oder Dosiervorrichtung weist bevorzugterweise eine Niederdruckpumpe, insbesondere eine Zahnradpumpe, auf. Dadurch kann der Faserwerkstoff bei einem Druck kleiner als 5 bar über Atmosphärendruck mit dem Matrixwerkstoff getränkt werden. Des Weiteren kann somit eine besonders einfache und kostengünstige Vorrichtung zur Herstellung thermoplastischer Preforms bereitgestellt werden. Die Faserzuführeinheit kann in Form einer Spule oder Rolle ausgebildet sein. Beispielsweise können auch mehrere Rollen bzw. Spulen vorgesehen sein, wobei mehrere Endlosfaserrovings von den unterschiedlichen Rollen gleichzeitig abgewickelt und der Imprägniervorrichtung zugeführt werden. Das Ablagemittel kann als eine Art Rolle oder Walze ausgebildet sein. Dadurch ist es möglich, den mit dem Matrixwerkstoff getränkten Faserwerkstoff kontinuierlich nachzuführen und gleichzeitig auf der Oberfläche des Preformwerkzeugs abzurollen bzw. abzulegen und dabei bevorzugterweise gegen die Oberfläche des Preformwerkzeugs anzudrücken.

### Kurze Beschreibung der Zeichnungen

Die Erfindung wird im Folgenden anhand einer bevorzugten Ausführungsform beispielhaft erläutert.

Es zeigt schematisch:

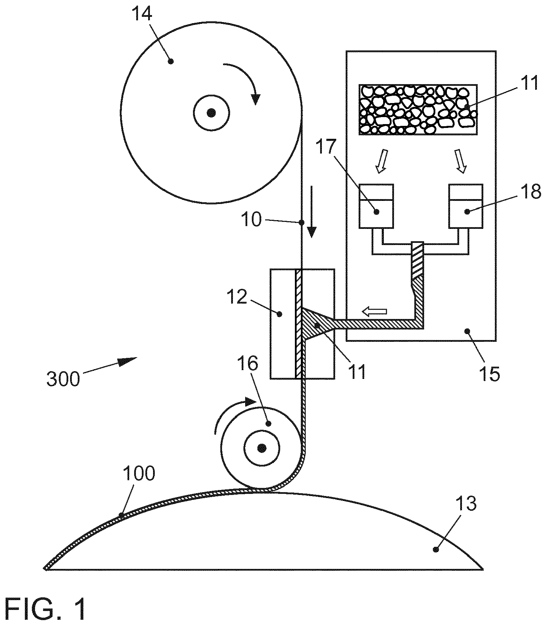

- Figur 1:: eine Prinzipdarstellung einer Vorrichtung zur Herstellung thermoplastischer Preforms sowie die einzelnen Verfahrensschritte zur Herstellung der Preforms selbst.

### Bevorzugte Ausführungsform der Erfindung

Figur 1 zeigt eine perspektivische Prinzipdarstellung einer Vorrichtung 300 zur Herstellung thermoplastischer Preforms 100 sowie die einzelnen Verfahrensschritte hierfür.

Die Vorrichtung 300 weist hierfür eine Faserzuführeinheit 14 zur Zuführung eines Faserwerkstoffs 10 zu einer Imprägniervorrichtung 12 auf. Innerhalb der Imprägniervorrichtung 12 wird der Faserwerkstoff 10 mit einem Matrixwerkstoff 11 getränkt bzw. imprägniert.

Hierfür ist der Imprägniervorrichtung 12 eine Dosiervorrichtung 15 vorgeschaltet, innerhalb welcher der Matrixwerkstoff 11 in dosierter Form bereitgestellt wird. Hierfür kann innerhalb der Dosiervorrichtung 15 der Matrixwerkstoff 11 zusammen mit einem Aktivator 17 und einem Katalysator 18 aufgeschmolzen und vermischt werden. Der somit vorbereitete Matrixwerkstoff 11 wird bezüglich dessen Menge innerhalb der Dosiervorrichtung 15 dosiert und auf den kontinuierlich durch die Imprägniervorrichtung 12 hindurchgeführten Faserwerkstoff 10 aufgebracht.

Von der Imprägniervorrichtung 12 wird der mit dem Matrixwerkstoff 11 getränkte Faserwerkstoff 10 weiter zum Ablagemittel 16 geführt. Mit dem Ablagemittel 16 wird der getränkte Faserwerkstoff 10 auf einer geformten Oberfläche eines Preformwerkzeugs 13 abgelegt. Dabei kann der getränkte Faserwerkstoff 10 mittels des Ablagemittels 16 gegen die Oberfläche des Preformwerkzeugs 13 angedrückt werden und dem Faserwerkstoff 10 gleichzeitig optional Wärme zugeführt werden.

Der mit Matrixwerkstoff 11 getränkte Faserwerkstoff 10 wird auf dem Preformwerkzeug 13 schichtweise abgelegt. Dadurch kann eine lastpfadgerechte Struktur mit einem sehr hohen Leichtbaugrad für das Preform 100 hergestellt werden.

Die Faserzuführeinheit 14 kann aus einer Rolle bzw. Spule bestehen. Beispielsweise kann hiermit ein Faserroving abgewickelt und der Imprägniervorrichtung 12 zugeführt werden. Auch könnte die Faserzuführeinheit 14 mehrere Rollen bzw. Spulen aufweisen, wobei mehrere Endlosfaserrovings gleichzeitig abgewickelt und der Imprägniervorrichtung 12 zugeführt werden können.

Das Ablagemittel 16 kann in der einfachsten Ausbildung als Rolle oder Walze ausgebildet sein. Damit kann der getränkte Faserwerkstoff 10 kontinuierlich nachgeführt und gleichzeitig auf der Oberfläche des Preformwerkzeugs 13 abgerollt bzw. gegen die Oberfläche des Preformwerkzeugs 13 angedrückt werden.

### Bezugszeichenliste

- 100: Preform
- 200: Faserverstärktes Kunststoffbauteil
- 300: Vorrichtung zur Herstellung thermoplastischer Preforms

- 10: Faserwerkstoff
- 11: Matrixwerkstoff
- 12: Imprägniervorrichtung
- 13: Preformwerkzeug
- 14: Faserzuführeinheit
- 15: Dosiervorrichtung
- 16: Ablagemittel
- 17: Aktivator
- 18: Katalysator

## Patentansprüche

1. Verfahren zur Herstellung thermoplastischer Preforms (100), wobei ein Faserwerkstoff (10) mit einem reaktiven thermoplastischen Matrixwerkstoff (11) getränkt wird, wobei das Verfahren zumindest die folgenden Schritte aufweist:
a) Zuführen des Faserwerkstoffs (10) in eine Imprägniervorrichtung (12); und
b) Tränken des Faserwerkstoffs (10) mit dem Matrixwerkstoff (11) innerhalb der Imprägniervorrichtung (12) unter Zufuhr von Wärme, mit einer Temperatur unterhalb der Schmelztemperatur des Endprodukts, also des faserverstärkten Kunststoffbauteils (200); und
c) Ablegen des mit dem Matrixwerkstoff (11) getränkten Faserwerkstoffs (10) auf einem Preformwerkzeug (13); und
d) Abkühlen des auf dem Preformwerkzeug (13) abgelegten und mit dem Matrixwerkstoff (11) getränkten Faserwerkstoffs (10) bis der Matrixwerkstoff (11) erstarrt ist.

2. Verfahren gemäß Anspruch 1,
**dadurch gekennzeichnet,**
**dass** der Faserwerkstoff (10) bei einem Druck kleiner als 5 bar über Atmosphärendruck mit dem Matrixwerkstoff (11) getränkt wird.

3. Verfahren gemäß Anspruch 1 oder 2,
**dadurch gekennzeichnet,**
**dass** der Faserwerkstoff (10) unter Zufuhr von Wärme mit einer Temperatur zwischen 60 °C und 140 °C mit dem Matrixwerkstoff (11) getränkt wird.

4. Verfahren gemäß einem der vorhergehenden Ansprüche,
**dadurch gekennzeichnet,**
**dass** der Matrixwerkstoff (11) beim Ablegen des mit dem Matrixwerkstoff (11) getränkten Faserwerkstoffs (10) auf dem Preformwerkzeug (13) noch einen flüssigen Zustand aufweist.

5. Verfahren gemäß einem der vorhergehenden Ansprüche,
**dadurch gekennzeichnet,**
**dass** beim Ablegen des mit dem Matrixwerkstoff (11) getränkten Faserwerkstoffs (10) dieser gegen das Preformwerkzeug (13) angedrückt wird.

6. Verfahren gemäß einem der vorhergehenden Ansprüche,
**dadurch gekennzeichnet,**
**dass** beim Ablegen des mit dem Matrixwerkstoff (11) getränkten Faserwerkstoffs (10) diesem Wärme zugeführt wird.

7. Verfahren gemäß einem der vorhergehenden Ansprüche,
**dadurch gekennzeichnet,**
**dass** der Matrixwerkstoff (11) vor oder beim Zuführen in die Imprägniervorrichtung (12) dosiert wird.

8. Verfahren gemäß einem der vorhergehenden Ansprüche,
**dadurch gekennzeichnet,**
**dass** der in Matrixwerkstoff (11) getränkte Faserwerkstoff (10) mittels eines Ablagemittels (16) in mehreren Schichten übereinander auf dem Preformwerkzeug abgelegt wird.

## Claims

1. Method for producing thermoplastic preforms (100), wherein a fibrous material (10) is impregnated with a reactive thermoplastic matrix material (11), wherein the method comprises at least the following steps:
a) feeding the fibrous material (10) into an impregnating device (12); and
b) impregnating the fibrous material (10) with the matrix material (11) within the impregnating device (12) while supplying heat, at a temperature below the melting temperature of the end product, that is to say the fibre-reinforced plastic component (200); and
c) depositing the fibrous material (10) impregnated with the matrix material (11) on a preform tool (13); and
d) cooling the fibrous material (10) impregnated with the matrix material (11) and deposited on the preform tool (13) until the matrix material (11) has solidified.

2. Method according to Claim 1,
**characterized**
**in that** the fibrous material (10) is impregnated with the matrix material (11) at a pressure less than 5 bar above atmospheric pressure.

3. Method according to Claim 1 or 2,
**characterized**
**in that** the fibrous material (10) is impregnated with the matrix material (11) while heat is supplied at a temperature of between 60°C and 140°C.

4. Method according to one of the preceding claims,
**characterized**
**in that** the matrix material (11) is still in a liquid state when the fibrous material (10) impregnated with the matrix material (11) is deposited on the preform tool (13).

5. Method according to one of the preceding claims,
**characterized**
**in that**, when the fibrous material (10) impregnated with the matrix material (11) is deposited, it is pressed against the preform tool (13).

6. Method according to one of the preceding claims,
**characterized**
**in that**, when the fibrous material (10) impregnated with the matrix material (11) is deposited, heat is supplied to it.

7. Method according to one of the preceding claims,
**characterized**
**in that** the matrix material (11) is metered before or during feeding into the impregnating device (12).

8. Method according to one of the preceding claims,
**characterized**
**in that** the fibrous material (10) impregnated in matrix material (11) is deposited on the preform tool in a number of layers one on top of the other by means of a depositing means (16).

## Revendications

1. Procédé de fabrication de préformes thermoplastiques (100), dans lequel un matériau fibreux (10) est imprégné avec un matériau de matrice thermoplastique réactif (11), le procédé comprenant au moins les étapes suivantes :
a) l'introduction du matériau fibreux (10) dans un dispositif d'imprégnation (12) ; et
b) l'imprégnation du matériau fibreux (10) avec le matériau de matrice (11) à l'intérieur du dispositif d'imprégnation (12) avec apport de chaleur, avec une température inférieure à la température de fusion du produit final, c'est-à-dire du composant en matière plastique renforcé par des fibres (200) ;
et
c) le dépôt du matériau fibreux (10) imprégné avec le matériau de matrice (11) sur un outil de préforme (13) ; et
d) le refroidissement du matériau fibreux (10) imprégné avec le matériau de matrice (11) et déposé sur l'outil de préforme (13) jusqu'à ce que le matériau de matrice (11) soit solidifié.

2. Procédé selon la revendication 1, **caractérisé en ce que** le matériau fibreux (10) est imprégné dans matériau de matrice (11) à une pression inférieure à 5 bar au-dessus de la pression atmosphérique.

3. Procédé selon la revendication 1 ou 2, **caractérisé en ce que** le matériau fibreux (10) est imprégné avec le matériau de matrice (11) avec apport de chaleur avec une température comprise entre 60 °C et 140 °C.

4. Procédé selon l'une quelconque des revendications précédentes, **caractérisé en ce que** le matériau de matrice (11) présente encore un état liquide lors du dépôt du matériau fibreux (10) imprégné avec le matériau de matrice (11) sur l'outil de préforme (13).

5. Procédé selon l'une quelconque des revendications précédentes, **caractérisé en ce que**, lors du dépôt du matériau fibreux (10) imprégné avec le matériau de matrice (11), celui-ci est pressé contre l'outil de préforme (13).

6. Procédé selon l'une quelconque des revendications précédentes, **caractérisé en ce que**, lors du dépôt du matériau fibreux (10) imprégné avec le matériau de matrice (11), de la chaleur est apportée à celui-ci.

7. Procédé selon l'une quelconque des revendications précédentes, **caractérisé en ce que** le matériau de matrice (11) est dosé avant ou lors de l'introduction dans le dispositif d'imprégnation (12).

8. Procédé selon l'une quelconque des revendications précédentes, **caractérisé en ce que** le matériau fibreux (10) imprégné avec le matériau de matrice (11) est déposé au moyen d'un moyen de dépôt (16) en plusieurs couches les unes sur les autres sur l'outil de préforme.
